# EUROPEAN PATENT APPLICATION

(11) **EP 3 124 690 A1**
(43) Date of publication of application: **01.02.2017**
(21) Application number: 15178433.7
(22) Date of filing: 27.07.2015
(51) Int. Cl.: D06F 58/28, D06F 58/20

(54) **METHOD OF OPERATING A HEAT-PUMP DRYER**

(71) Applicant: Electrolux Appliances Aktiebolag, 105 45 Stockholm (SE)
(72) Inventor: VIAN, Alessandro, 33080 Porcia (PN) (IT); ZANDONA', Stefano, 33080 Porcia (PN) (IT); RAGOGNA, Roberto, 33080 Porcia (PN) (IT); GEROLIN, Giancarlo, 33080 Porcia (PN) (IT); DEL PUPPO, Matteo, 33080 Porcia (PN) (IT)
(74) Representative: Electrolux Group Patents

(57) **Abstract**

According to the invention a method for operating a heat-pump dryer (2) during a drying program is provided. The dryer comprises: a cabinet (4), a drum (16) arranged within the cabinet and being adapted to receive laundry (18) for drying the laundry within the drum using drying air, an air channel (20) adapted to guide the drying air from at least one air outlet (24) at the drum (16) to at least one air inlet (22) at the drum for providing an air circulation arrangement, a drying air fan (28) adapted to convey the drying air through the air circulation arrangement, a heat pump system (44) comprising a first heat exchanger (32) adapted to heat the drying air, a second heat exchanger (34) adapted to cool the drying air for humidity condensation, and a compressor (36) adapted to circulate refrigerant through the first and second heat exchangers, a temperature sensor adapted to detect a temperature (Tr) of the heat pump system (44), a motor (70) adapted to drive the drying air fan (28), and a motor (30) adapted to drive the drum (16) independent of the motor (70) driving the drying air fan (28). The method comprises: a) starting a drying program, b) monitoring the temperature (Tr) of the heat pump system, and c) if the temperature of the heat pump system is at or above a first threshold value (Tr), setting, at least for one or more periods of the drying program, the rotation speed (D) or the maximum rotation speed of the drum (16) in dependency of the temperature (Tr) of the heat pump system.

## Description

The invention relates to the operation of a heat-pump dryer during execution of a drying program. Components of the dryer are controlled in dependency of the temperature of the heat pump system.

WO 2014/067797 A2 suggests a drying program for a heat-pump dryer in which the temperature of the heat pump system is monitored. In dependency of the monitored temperature, the power of a drying air fan is adjusted. Thereby optimized operation conditions of the heat pump system should be maintained, wherein specifically with increasing heat-pump temperature the drying air fan is adjusted such that a higher amount of heat is removed from the heat pump system. The motor driving the fan can also drive the drum.

It is an object of the invention, to provide an operation method for a heat pump dryer which results in lower noise emission and/or lower power consumption.

The invention is defined in claim 1. Particular embodiments are set out in the dependent claims.

According to a second aspect of the invention, a method for operating a heat-pump dryer during a drying program is provided. The dryer comprises: a cabinet; a drum arranged within the cabinet and being adapted to receive laundry for drying the laundry within the drum using drying air; an air channel adapted to guide the drying air from at least one air outlet at the drum to at least one air inlet at the drum for providing an air circulation arrangement; a drying air fan adapted to convey the drying air through the air circulation arrangement; a heat pump system comprising a first heat exchanger adapted to heat the drying air, a second heat exchanger adapted to cool the drying air for humidity condensation, and a compressor adapted to circulate refrigerant through the first and second heat exchangers; a temperature sensor adapted to detect a temperature of the heat pump system; a motor driving the drying air fan; and a motor driving the drum independent of the motor driving the drying air fan.

Preferably the heat pump system further comprises an expansion device and/or a cooling air fan for cooling the compressor or an auxiliary heat exchanger of the heat pump system and/or one or more further components as described below in the detailed embodiment. The dryer may be a dryer or a washer-dryer implementing the drying function/program. The air circulation arrangement is provided by the air channel and the fluidly connected drum. E.g. in the washer-dryer the drum may be arranged in a tub and the at least one inlet and/or outlet opening is provided at the tub. The drying air guiding by the tub is providing the connection between the drum and the at least one inlet/outlet where applicable. The drum may be rotated by a drum motor around a horizontal axis, around an axis inclined relative to the vertical axis, or around a vertical axis. In the washer-dryer preferably one motor is provided for rotating the drum and another motor is provided for rotating the drying air fan.

The method according to the first aspect comprises: starting a drying program; monitoring the temperature of the heat pump system; and, if the temperature of the heat pump system is at or above a first threshold value, setting, at least for one or more predetermined periods of the drying program, the rotation speed or the maximum rotation speed of the drum in dependency of the temperature of the heat pump system.

Preferably, if the temperature of the heat pump system is at or above the first threshold value, one or more of the following is provided by the method: a) reducing the fan rotational speed, b) reducing the fan conveyance rate, c) deactivating the operation of the compressor or reducing the compressor speed, and d) activating a fan for cooling the compressor.

The second aspect method may provide the steps of monitoring the temperature of the heat pump system and, if the temperature is at or below a second temperature threshold, restarting the compressor.

In an embodiment the temperature sensor adapted to detect the temperature of the heat pump system is arranged at one of the following positions of the heat pump system: a) an outlet of the first heat exchanger for detecting the refrigerant temperature, b) an outlet of the compressor for detecting the refrigerant temperature, c) the compressor for detecting the compressor temperature, d) the second heat exchanger for detecting the refrigerant temperature, e) an expansion device arranged between the second and first heat exchanger for detecting the refrigerant temperature, f) in the air channel between the first heat exchanger and the at least one air inlet at the drum for detecting the drying air temperature, g) in the air channel between the at least one outlet at the drum and the second heat exchanger for detecting the drying air temperature, or h) a first temperature sensor is arranged in the air channel between the first heat exchanger and the at least one air inlet at the drum for detecting a first drying air temperature and a second temperature sensor is arranged in the air channel between the at least one air outlet at the drum and the second heat exchanger for detecting a second drying air temperature, wherein the monitored temperature is the temperature difference between the first and second drying air temperature.

In an embodiment, when the temperature of the heat pump system is at or above the first threshold value, then:
a) the compressor is deactivated or operated at a reduced speed,
b) the compressor cooling fan is activated, and
c1) the drying air fan is deactivated, or c2) the drying air fan is operated,
and optionally d) the compressor cooling fan is activated, in particular when c2) the drying air fan is operated.

Preferably the drying air fan is rotated at a reduced maximum rotation speed as compared to the rotation speed before detecting that the temperature is at or above the first threshold value, and/or at a reduced duty ratio as compared to the duty ratio before detecting that the temperature is at or above the first threshold value, or the drum rotation is stopped.

In an embodiment the motor for driving the compressor cooling fan is a variable speed motor and the method further comprises: receiving a user-input indicating the option silent-mode or night-mode for operating the dryer; and, if the user-input indicates such mode selection by the user, operating, at least for predetermined periods of the drying program, the compressor cooling fan at a second speed in case the compressor cooling fan is activated, and otherwise, if the user-input indicates that such mode was not selected by the user, operating the compressor cooling fan at a first speed in case the compressor cooling fan is activated; wherein the first speed is higher than the second speed. Preferably during the silent-mode or night-mode, the compressor cooling fan is not operated always with the reduced second speed.

Generally, the silent-mode or night-mode for this embodiment and of the following embodiments is applicable for the case that (both possible):
a) An available drying program is modified in its control such that one or more components (drying air fan and/or drum and/or compressor and/or compressor cooling fan) are operated such that the sum of the noise emission of these components is reduced (e.g. modified basic program, but running as this basic program with the additional option 'night-mode' or 'silent-mode'). This can be available for all or for selected ones of the basic programs and the result is that as compared to those basic programs the noise emission is reduced.
b) In addition or alternatively to the (modifiable or non-modifiable) basic programs an dedicated silent-mode or night-mode program is provided in which - as compared to the basic programs - the noise emission of the one or more components (drying air fan and/or drum and/or compressor and/or compressor cooling fan) is reduced as the standard measure.

In an embodiment the motor for driving the drying air fan is a variable speed motor and the method further comprises: receiving a user-input indicating the option silent-mode or night-mode for operating the dryer; and, if the user-input indicates such mode selection by the user, operating, at least for predetermined periods of the drying program, the drying air fan at a second speed in case the drying air fan is activated; and otherwise, if the user-input indicates that such mode was not selected by the user, operating the drying air fan at a first speed in case the drying air fan is activated; wherein the first speed is higher than the second speed. Preferably during the silent-mode or night-mode, the drying air fan is not operated always with the reduced second speed.

In an embodiment the motor for driving the compressor is a variable speed motor and the method further comprises: receiving a user-input indicating the option silent-mode or night-mode for operating the dryer; and, if the user-input indicates such mode selection by the user, operating, at least for predetermined periods of the drying program, the compressor at a second speed in case the compressor is activated; and otherwise if the user-input indicates that such mode was not selected by the user, operating the compressor at a first speed in case the compressor is activated; wherein the first speed is higher than the second speed. Preferably during the silent-mode or night-mode, the compressor is not operated always with the reduced second speed.

In an embodiment, the method further comprises: starting a drying program; monitoring the temperature of the heat pump system; and, if the temperature of the heat pump system is at or above a first threshold value, deactivating the compressor and reducing at least one of: a) the drying air fan rotational speed, and/or b) the drying air fan conveyance rate, and/or c) the drum rotational speed.

Herein, 'deactivated' means not operated or stopped (zero rotation speed), while 'operated' means 'activated' where the component is rotated with non-zero rotation speed.

In an embodiment the drying program has a first drying phase which is before the temperature reaches (the first time) at or above the first threshold value, and a second drying phase after the first drying phase. In such denotation the compressor is deactivated when the second drying phase starts and the drying air fan rotation speed and/or conveyance rate and/or drum rotation speed is reduced. For example, while the compressor is deactivated, the fan and/or drum rotational speed is reduced.

The noise emission of the heat pump dryer is reduced when besides the compressor also the drying air fan rotation speed and/or conveyance rate and/or drum rotation speed is/are reduced. This improves the user convenience when the dryer is located close to the living area of the user, in particular when the user wishes to avoid noise in the surroundings and/or in the night. At the same time, as the power consumed by these components is reduced, the momentary power consumption is reduced. One or both of the advantages are such that a possibly longer operation time of the drying program as compared to a 'basic' drying program is acceptable.

The lower power consumption not necessarily results in lower energy consumption for drying the same amount of laundry from the same humidity level. For the operation method it is acceptable that the duration is longer or becomes longer as compared to a basic drying program with the same drying result. However, it is generally observed that with longer drying periods the total energy consumption is lower for the same drying result when compared with faster drying programs. 'Power consumption' primarily relates to the power consumed and not to the energy consumed.

In an embodiment (which is the case in most dryers that are not washer-dryers), the drying air fan and the drum are driven by one common motor, then (relative) fan and drum speeds are reduced synchronously. Preferably (see below), when the drying air fan is driven in the counter clockwise rotation direction (second rotation direction), the fan conveyance rate is reduced due to a lower drying air conveyance rate as compared to rotate in the clockwise direction (first rotation direction) at the same speed. By this way the conveyance rate of the drying air fan can be reduced without reducing its (absolute) rotation speed and/or the (absolute) rotation speed of the drum. The effect of lower conveyance rate is a lower drying air flow rate which causes less noise than a higher drying air flow rate. Thus noise reduction is achieved when conveyance rate of fan is reduced, even if fan speed is not reduced.

The speed and/or conveyance rate 'reduction' means a reduction of the respective parameter(s) over time period: for example when averaging the speed/conveyance rate over 2, 3, 4 or 5 min, or average it over a time period during which the compressor is stopped and/or speed/flow rate is reduced. E.g. when comparing respective periods before and after stopping the compressor the (first time) when the temperature is at or above the first threshold value.

Preferably, in particular for a washer-dryer, the drying air fan is driven by a motor independent of a motor driving the drum. Preferably the method comprises: setting, at least for one or more predetermined periods of the drying program, the rotation speed or the maximum rotation speed of the drum in dependency of the temperature of the heat pump system.

In an embodiment, if it is detected that the temperature of the heat pump system is at or above the first threshold value, the compressor is deactivated after a predetermined delay time. Preferably the drying air fan rotation speed and/or conveyance rate and/or the drum rotation speed are (immediately) reduced when the temperature is at or above the first threshold value.

In an embodiment the end of a period, during which the compressor is stopped and during which at least one of the drum rotation speed, the fan rotational speed, and the flow rate is reduced, is determined by using one or more of the following conditions: a) a predetermined time period has lapsed, b) the temperature of the heat pump system is at or below a second threshold value, c) the temperature of the drying air is at or below a first drying air threshold value, d) a temperature difference as detected by two temperature sensors arranged at two different positions along the drying air circulation arrangement is at or is below a second drying air threshold value, and e) a temperature difference between a drying air temperature at the time of deactivating the compressor and the current drying air temperature is at or is above a third drying air threshold value. The period can also be denoted as duration. In case of a predetermined time period, preferably the time is counted since switching off the compressor. Restarting the compressor means that the compressor is reactivated and vice versa. Preferably the second threshold value of the heat pump system temperature is lower than the first threshold value.

Preferably during the drying program, at the end of such determined period, the compressor is restarted. And/or preferably at the end of the period the speed of drum and/or fan and/or conveyance rate is/are kept low - in this way the noise emission is still reduced despite e.g. restarting the compressor.

Where a drying air temperature is to be detected, preferably the drying air temperature is detected at a dedicated position along the drying air circulation arrangement, preferably any position along the air channel, more preferably at the drying air inlet and/or outlet at the drum. A temperature difference is preferably the difference of temperature detected at the drum inlet and the drum outlet.

In an embodiment, when the end of the period has been determined or when the period is lapsed, one or more of the following steps are implemented: a) the compressor is activated again, b) the rotation speed of a or the compressor cooling fan is reduced or the compressor cooling fan is deactivated or the duty rate of activating the compressor cooling fan is reduced, c) one or more of the following are increased: the drying air fan rotation speed, the drum rotation speed, and/or the conveyance rate of the drying air fan, and d) one or more are restored to the operation values at the time immediately before starting the period: the rotation speed of the compressor cooling fan, the rotation speed of the drum, and/or the conveyance rate of the fan.

In addition of deactivating the compressor and reducing of at least one of the drum rotational speed, the fan rotational speed, and/or the drying air flow rate, it may be provided to activate a cooling air fan for cooling the compressor. Preferably the rotation speed of the cooling air fan is reduced as compared to a 'basic' drying program and/or is lower as the nominal or maximum speed for further noise reduction. Preferably a or the compressor cooling fan is a variable speed fan that can be rotated at least at two different rotation speeds which are not zero. The 'variable' speed fan means that motor driving the fan has the variable speed and/or a power device providing the power to the fan motor can deliver two different (average) powers to the fan motor.

Generally herein, e.g. specifically for the fan speed and/or the drum speed (but presently mechanically not recommended for compressor), a 'reduced' rotation speed or a 'reduced' conveyance rate can be set by the corresponding component (fan/drum) in that it is periodically activated and deactivated in a ratio of activation/deactivation such that in average at a high duty ratio (time duration of being activated divided by time duration of the overall period) a higher rotation speeds/conveyance rates are achieved as compared to low duty ratio of activation/deactivation. E.g. the motor is driven by pulse width modulated (PWM) or frequency modulated (FM) power supply (e.g. inverter).

Preferably the temperature sensor adapted to detect the temperature of the heat pump system is arranged at one or more of the following positions of the heat pump system: a) an outlet of the first heat exchanger for detecting the refrigerant temperature, b) an outlet of the compressor for detecting the refrigerant temperature, c) the compressor for detecting the compressor temperature, d) the second heat exchanger for detecting the refrigerant temperature, e) an expansion device arranged between the second and first heat exchanger for detecting the refrigerant temperature, f) in the air channel between the first heat exchanger and the at least one air inlet at the drum for detecting the drying air temperature, g) in the air channel between the at least one outlet at the drum and the second heat exchanger for detecting the drying air temperature, or h) a first temperature sensor is arranged in the air channel between the first heat exchanger and the at least one air inlet at the drum for detecting a first drying air temperature and a second temperature sensor is arranged in the air channel between the at least one air outlet at the drum and the second heat exchanger for detecting a second drying air temperature, wherein the monitored temperature is the temperature difference between the first and second drying air temperature. In case of providing two or more temperature sensors, the difference or any other combination of the temperatures detected at different positions can be combined. Some of the above temperatures are preferably indicating (essentially) the temperature of the refrigerant in the heat pump system.

In an embodiment, during the time before the temperature being at or above the first threshold value (e.g. in the above mentioned first drying phase), the drying program is performed by: a) the compressor being activated, b) the drying air fan is activated, c) the drum is rotated, and d) a or the compressor cooling fan being deactivated. Preferably the 'activated' means that drying air fan is operated at nominal (e.g. maximum) rotation speed and/or is rotated in the first rotation direction and/or the drum is rotated at nominal speed. 'Deactivated' means that the corresponding motor does not drive the component. Preferably the 'time before' means that the respective operation is provided the most time duration before detecting the first threshold value and/or the time period immediately before detecting the first threshold value.

Generally, when no separate motor for drying air fan and drum is provided, the drum and fan rotation speeds are synchronized. Further preferably a variable speed drum motor and/or a variable speed fan motor are provided.

In the time period before detecting the first threshold value, preferably one or more of the following applies: the compressor is operated at a first (average) rotation speed of compressor motor rotation and/or the drying air fan is operated at a first (average) rotation speed of fan motor rotation and/or the drum is rotated at first (average) and/or maximum rotation speed of drum motor rotation and/or the drying air fan is operated at a first (average) conveyance rate (as noted conveyance rate may depend on rotation direction of motor and thus fan). Where applicable, the first operation speed(s)/conveyance rate during the first drying phase (before reaching at or above the first threshold value) are higher than the second operation speed(s)/conveyance rate at the second drying phase, respectively, where the speed(s)/conveyance rate are reduced.

In an embodiment, the drying air fan is driven by a or the motor independent of a or the motor driving the drum and when the temperature of the heat pump system is at or above the first threshold value, then: a) the compressor is deactivated, b) the compressor cooling fan is activated, c) the drying air fan is deactivated, and d) the drum is rotated or is stopped.

Preferably, when the temperature of the heat pump system is at or above the first threshold value, the drum is rotated by one or more of: a) at the same rotation speed as before detecting that the temperature is at or above the first threshold value, b) at a reduced rotation speed as compared to the rotation speed before detecting that the temperature is at or above the first threshold value, and c) at a reduced duty ratio as compared to the duty ratio before detecting that the temperature is at or above the first threshold value. Preferably the 'reduced' speed and speed 'before' relates to the respective maximum rotation speed and/or average rotation speed.

Preferably, when the temperature of the heat pump system is at or above the first threshold value, the fan is driven by a or the motor independent of a or the motor driving the drum and:
a) the compressor is deactivated, b) the compressor cooling fan is activated, c) the drum rotation is deactivated or the drum is stopped, and d) the drying air fan is operated.
Additionally or alternatively, the drying air fan is rotated by one or more of: at a reduced maximum rotation speed as compared to the rotation speed before detecting that the temperature is at or above the first threshold value, and/or at a reduced duty ratio as compared to the duty ratio before detecting that the temperature is at or above the first threshold value, or the drum rotation is stopped.

Preferably for the above, where the variable speed motor is provided for the drum and/or drying air fan and/or cooling air fan, the reduced second speed which is applied in the second drying phase is lower than the first speed which is applied in the first drying phase. Preferably the transition from the first to the second drying phase is when the temperature of the heat pump system is (the first time) at or above the first threshold value. The 'speed' may relate to the maximum speed in the first and/or second drying phase and/or the temporal average of the 'speed' during the first and/or second period. Such 'reduction' of speed relates to the drum and/or drying air fan (and/or cooling air fan).

The dryer may be implemented by a washer dryer providing at least one washing program. Preferably then a tub is arranged in the cabinet and the drum is arranged in the tub; the at least one outlet of the drum is at least one outlet of the tub, or the at least one inlet of the drum is at least one inlet of the tub, or the at least one outlet of the drum is at least one outlet of the tub and the least one inlet of the drum is at least one inlet of the tub; and the fan is driven by a or the motor independent of a or the motor driving the drum. For example the drum and the fan can be rotated/activated independent of each other and - if this option provided -the speed and/or direction of rotation of the drum and the drying air fan can be adjusted independent each other.

In an embodiment, at least one of the following parameters for controlling the drying program: a) the temperature value of the first threshold value, b) the value of the reduced fan rotational speed (e.g. second speed), c) the value of the reduced fan conveyance rate (e.g. second conveyance rate), d) the value of the reduced drum rotational speed (e.g. second speed), e) the value of the reduced compressor cooling fan speed (e.g. second speed), f) the delay time, if the deactivation of the compressor is delayed after detection that the temperature of the heat pump system is at or above the first threshold value, g) the temperature value of the second threshold value, and h) one or more parameters for operating the dryer after the temperature value is at or below the second threshold value;
are depending on one or more of the following: m) a laundry treatment program or laundry treatment options as set by a user via an input device of the dryer, n) a laundry type as set by a user or as estimated by the dryer, o) the duration of the laundry treatment program set by a user or as estimated by the dryer, p) in case that the drying program is part of a washing and drying program, an estimation of the water content in the laundry at the beginning of a drying program based on the laundry weight difference between the dry laundry weight and the laundry wet weight at the end of the washing program, q) the amount or weight of laundry (60) to be dried, r) the current degree of humidity of the laundry, s) the temperature of the drying air, and t) the duration since the start of the drying.

In a second aspect of the invention, a method for operating a heat pump dryer during a drying program is provided. The dryer comprises: a cabinet; a drum arranged within the cabinet and being adapted to receive laundry for drying the laundry within the drum using drying air; an air channel adapted to guide the drying air from at least one air outlet at the drum to at least one air inlet at the drum for providing an air circulation arrangement; a drying air fan adapted to convey the drying air through the air circulation arrangement; a heat pump system comprising a first heat exchanger adapted to heat the drying air, a second heat exchanger adapted to cool the drying air for humidity condensation, and a compressor adapted to circulate refrigerant through the first and second heat exchangers; and a temperature sensor adapted to detect a temperature of the heat pump system.

Preferably the heat pump system further comprises an expansion device and/or a cooling air fan for cooling the compressor or an auxiliary heat exchanger of the heat pump system and/or one or more further components as described below in the detailed embodiment. The dryer may be a dryer or a washer-dryer implementing the drying function/program. The air circulation arrangement is provided by the air channel and the fluidly connected drum. E.g. in the washer-dryer the drum may be arranged in a tub and the at least one inlet and/or outlet opening is provided at the tub. The drying air guiding by the tub is providing the connection between the drum and the at least one inlet/outlet where applicable. The drum may be rotated by a drum motor around a horizontal axis, around an axis inclined relative to the vertical axis, or around a vertical axis. In the washer-dryer preferably one motor is provided for rotating the drum and another motor is provided for rotating the drying air fan.

The method comprises: starting a drying program; monitoring the temperature of the heat pump system; and, if the temperature of the heat pump system is at or above a first threshold value, deactivating the compressor and reducing at least one of: a) the drying air fan rotational speed, and/or b) the drying air fan conveyance rate, and/or c) the drum rotational speed. Herein, 'deactivated' means not operated or stopped (zero rotation speed), while 'operated' means 'activated' where the component is rotated with non-zero rotation speed.

The configuration(s) of the dryer of the second aspect of the invention may be provided as the configuration(s) of the dryer of the first aspect of the invention and vice versa.
The steps of the method of the second aspect of the invention may be configured additionally with one or more steps of the method of the first aspect of the invention and vice versa. Advantages and effects achieved by the first aspect can be respectively achieved by the second aspect in case the same or similar feature and/or step and/or element is provided - and vice versa.
In embodiments the method and/or the dryer implementing the method may comprise one or more features and/or elements and/or steps in any arbitrary combination or sub-combination as disclosed above for the first and/or second embodiment and/or below in the detailed embodiments.

Reference is made in detail to preferred embodiments of the invention, examples of which are illustrated in the accompanying figures, which show:
- Fig. 1: a perspective view of a laundry dryer,
- Fig. 2: a schematic overview of some components of the dryer of Fig. 1,
- Fig. 3: a block diagram depicting some of the components of the dryer of Fig. 1 providing signals to a control unit and/or being controlled by the control unit,
- Figs. 4a - 4d: time diagrams showing the temporal behavior of the refrigerant temperature and some temperature-controlled parameters, and
- Figs. 5a - 5c: time diagrams of control parameters according to another embodiment.

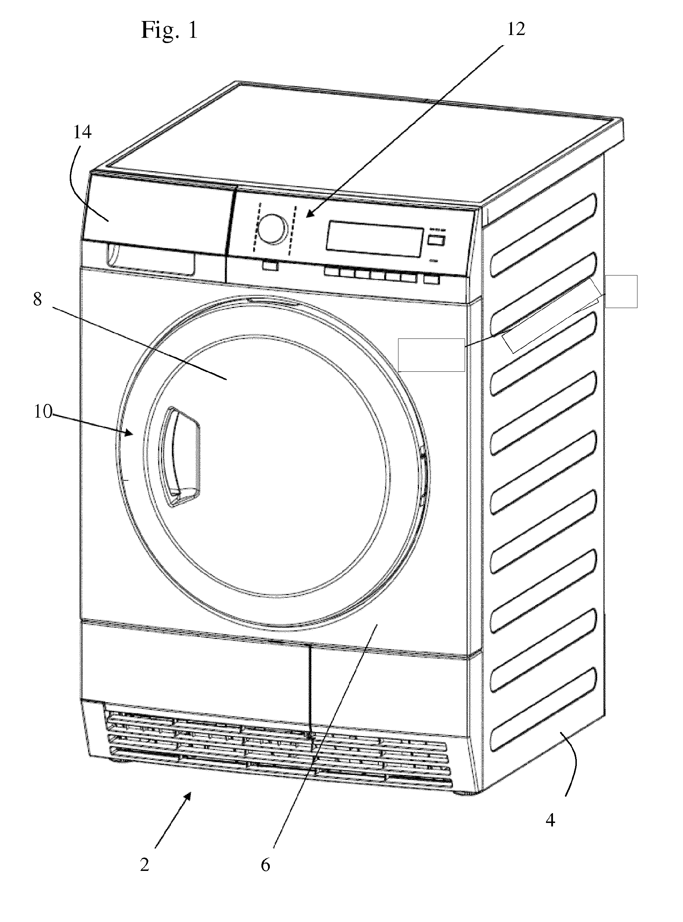

Fig. 1 shows a perspective outer appearance of an exemplary laundry dryer 2. In this embodiment, the laundry dryer is a dryer only, but in alternative embodiments the dryer function according to the control method is implemented by a washer-dryer in which the rotatable drum is arranged in a tub and which provides a washing arrangement including (for example) a detergent dispenser, a heater for heating wash liquid and a drain pump for draining out of the liquids.

As shown in Fig. 1, the laundry dryer 2 has an outer housing 4 or cabinet including a front wall 6. At the front wall 6 a loading opening 8 is provided which is closed by a door 10. In the depicted embodiment the dryer is a front-loading dryer having a horizontal drum rotation axis, but in alternative embodiments the drum may be inclined relative to the horizontal and vertical directions, or the dryer may be a vertical rotation axis dryer in which the drum rotates around a vertical axis and where top-loading is provided.

The dryer 2 has a control panel 12 arranged at the upper region of the front wall 6 and a condensate drawer 14 in which the condensate collected from drying is stored until removal by the user.

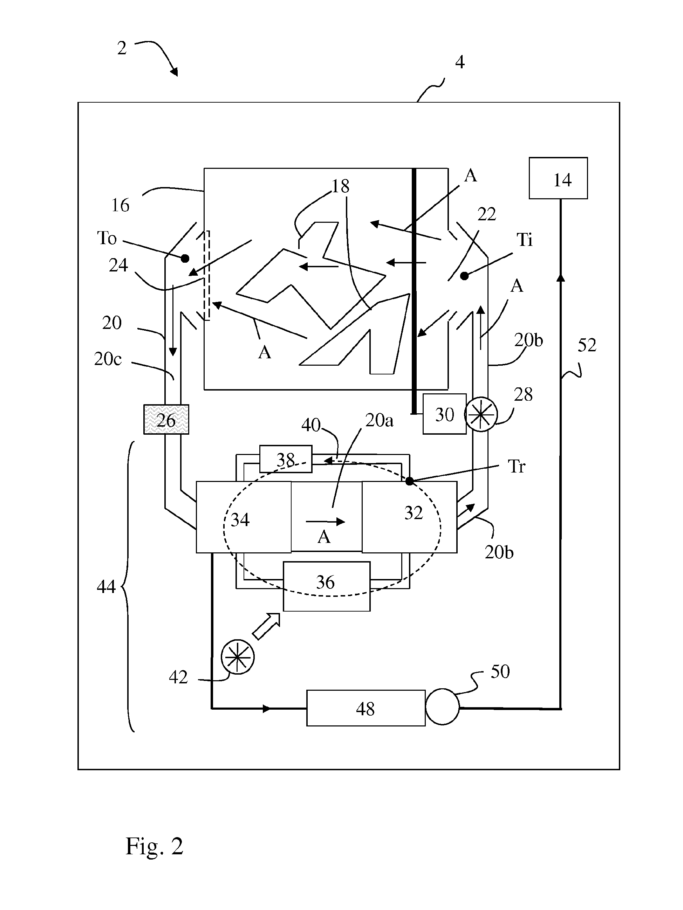

In the schematic diagram of components shown in Fig. 2, the drum 16 is arranged inside the housing 4, in which laundry 18 is received. The flow of drying air A is indicated by the arrows, wherein the drying air A leaves the drum 16 at an outlet 24 and enters a process air channel 20 at the front channel 20c. By the front channel 20c the drying air is guided through a fluff filter element 26 towards a second heat exchanger 34 and a first heat exchanger 32. The first and second heat exchangers 32, 34 are arranged in a battery channel 20a of the process air channel 20. The first heat exchanger 32 is a condenser which heats the drying air and the second heat exchanger 34 is an evaporator which cools the drying air for humidity removal in form of condensed water.

The drying air leaving the first heat exchanger 32 is entering a rear channel 20b in which a drying air fan 28 is arranged which conveys the drying air. The fan 28 is driven by a motor 30 which at same time drives the rotation of the drum 16. In the depicted embodiment, a belt driven by the motor 30 is wound around the drum mantel for driving the fan. In the depicted embodiment, in which the single motor 30 drives the fan 28 as well as the drum 16, the drum and fan 28 are driven in a synchronous manner according to the gear ratio. Synchronous rotation includes a forward and backward rotation according to the motor forward and backward rotation. As an example, the fan speed is identical to the motor speed as the fan is arranged on an axis of the motor 30, while via the belt the rotation of the motor is gear-reduced in an exemplary ratio of motor rotation speed/drum rotation speed of 50:1.

The first and second heat exchangers 32, 34 are part of a heat pump system 44 which further comprises an expansion device 38 and a compressor 36. In the heat pump system 44 a refrigerant loop 40 is formed, wherein the refrigerant pumped by the compressor 36 passes first the condenser 32, is forwarded to the expansion device 38 from where it expands into the second heat exchanger 34 and from where it is sucked into the compressor 36. Heat can be removed from the heat pump system (in addition to the heat deposited in the drying air and laundry for drying the laundry) by activating a cooling air fan 42 which provides a flow of cooling air from the outside of the cabinet 4 towards the outer surfaces of the compressor 36. After passing the compressor 36, the cooling air is exhausted out of the cabinet 4.

The condensate that formed at the evaporator 34 flows down and collects in a condensate collector 48. From the condensate collector 48 the condensate is pumped by a draining pump 50 through a drain conduit 52 into the condensate drawer 14 from where it can be removed by the user as mentioned above.

At the outlet 24 of the drum 16 a temperature sensor is provided which detects the outlet temperature To of the drying air. At the inlet 22 of the drum 16 another temperature sensor is provided which detects the inlet temperature Ti of the drying air. At the outlet of the condenser 32 a temperature sensor is provided which detects the refrigerant temperature Tr at this position.

In case the dryer 2 is a washer-dryer as mentioned above, preferably the outlet of the drying air is arranged in a gasket which is provided between the tub surrounding the drum and the front wall 6 of the washer-dryer. The inlet 22 of the drying air is then provided at an upper and rear side position of the tub from where the drying air enters the drum 16. Such drum has a perforated back wall and/or peripheral drum mantel through which the drying air enters into the drum. Of course, the drying air flow can also be reverted in view of the inlet/outlet of the washer-dryer as described here.

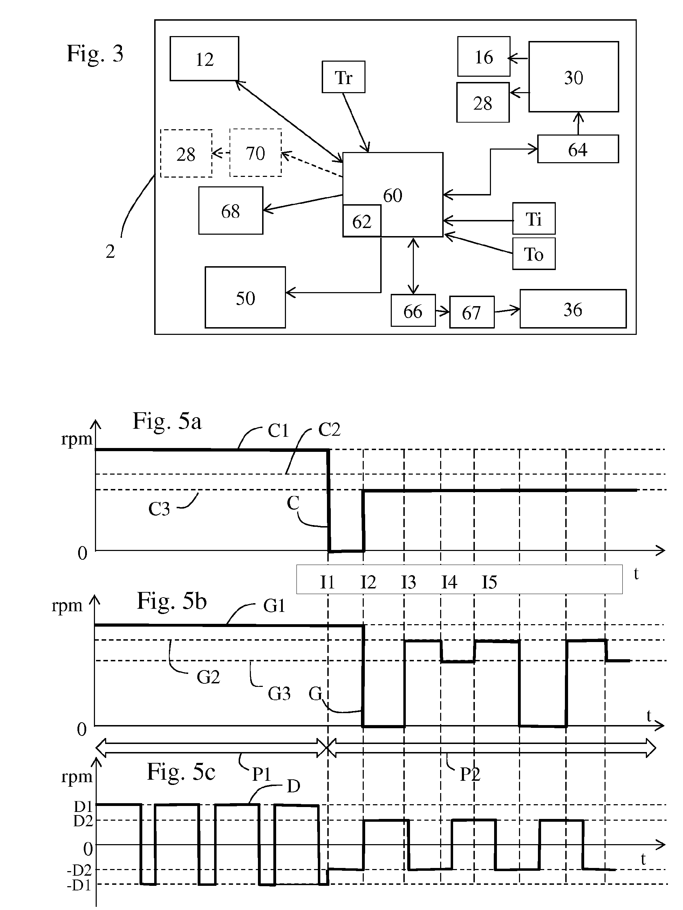

Fig. 3 is a block diagram of components of the dryer 2 that interact for enabling a control unit 60 to control the drying operation or program. The control unit 60 has a memory 62 in which program parameters and look-up tables are stored such that the control unit, by retrieving corresponding data from the memory 62, can control different basic drying programs preferably under conditions as set by the user via option selectors at the control panel 12. Such user-settable options are for example: the final drying degree, the load of the laundry loaded by the user and inputted by him/her, the type of laundry, the duration of drying, a silent- or night-mode option by which the operation noise can be reduced by corresponding input of the user under the control of the control unit, and/or an energy option.

The control unit 60 receives the signals from the sensors for the refrigerant temperature Tr, the inlet temperature Ti of the drying air, and the outlet temperature To of the drying air. The control unit sends control signals to a drum motor inverter 64 and receives operation parameters therefrom. The drum motor inverter 64 supplies the power to the motor 30 driving the drum 16 and the drying air fan 28. The control unit 60 sends control signals to a compressor motor inverter 66 and receives operation parameters therefrom. The inverter 66 powers a compressor motor 67 for driving the compressor 36. Further, the control unit 60 controls the draining pump 50, a motor 68 for driving the cooling air fan 68 and optionally, if a separate motor 70 is provided for the drying air fan 28, the drying air fan motor 70.

In case of the dryer being a washer-dryer, normally the separate motor 70 is provided, such that the rotation speed of the drying air fan 28 can be set by the control unit 60 independent of the drum rotation speed via inverter 64 and drum motor 30. Of course, if the separate motor 70 is provided, the motor 30 does not drive the drying air fan 28.

In the following two embodiments of controlling a drying program are described. The drying programs described here as examples implement a modification of available basic drying programs provided by the control unit 60. The modification of the basic drying program is provided in response the user having selected the option silent-mode or night-mode. By applying this option the basic drying program is executed under the condition that the overall operation noise of the dryer 2 (or washer-dryer) is reduced as compared to the operation noise generated when executing the (unmodified) basic drying program. In the following, it is described how as compared to the basic program, in particular in a second drying phase P2 as compared to a first drying phase P1, the noise is reduced in that the operation speed and/or operation mode of some of the components is reduced.

Alternatively or additionally it may be provided that the user, instead of activating the night-mode or silent-mode, can select via a program selector provided at the control panel 12 a separate (dedicated) drying program which does not represent a modification of a basic program, but which is an independent drying program that reduces noise and provides more user flexibility and a more stringent noise reduction (as compared to activate the night- or silent-mode via an option selector).

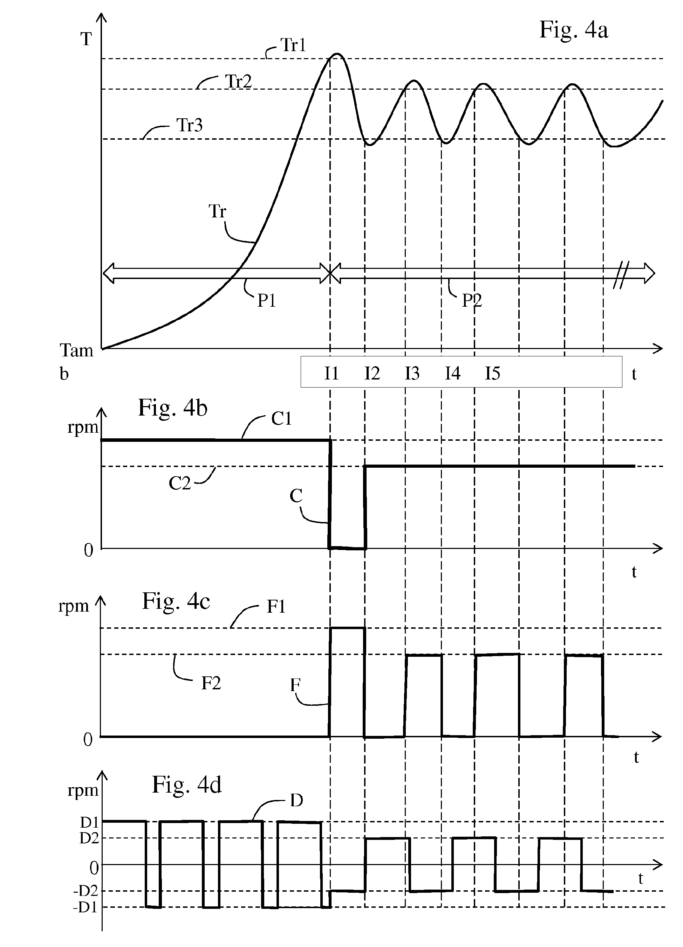

Figs. 4a - 4d show an embodiment in which the user activates the option of noise-mode via an option selector provided at the control panel 12. Having activated this option, at the beginning the drying program runs at if it is a basic program, which is here without a noise reduction over the basic program during the first phase P1 of drying. This is acceptable for example if the user immediately starts the dryer and goes to bed after some minutes (the time required for executing the first phase P1) before he/she is falling asleep.

In the first phase P1 until to the instance I1, the control unit 60 provides that the compressor 36 operates at nominal speed C1 which is the maximum speed of the compressor or may even be a booster speed which is used during the warm-up phase for bringing the heat pump system 44 in an operation state where an efficient drying operation can be achieved. Fig. 4b shows the compressor speed C which of course is the speed of the compressor motor 67.

Generally herein, fan speed, compressor speed and drum speed are used synonymously for the motor speed of the respective motor. The forward rotation direction may also be denoted as clockwise rotation direction or first rotation direction. The backward rotation can also be denoted as counter clockwise rotation direction or second rotation direction.

Fig. 4c shows the fan speed F of the cooling air fan 42 which conveys the outside air for cooling the compressor 36. Fig. 4d shows the rotation speed D of the drum 16 which is driven by the motor 30. As mentioned, the motor 30 can rotate in forward and backward direction such that correspondingly the drum 16 is driven in the forward direction (D positive) or in the backward direction (D negative). If the terms "maximum speed" or "speed reduction" are used, this refers to the absolute value if positive and negative rotation speeds are available. In the embodiment of the common motor 30 for fan 28 and drum 16, the speed and the direction of the drum rotation proportionally corresponds with the respective gear reduction ratio to the fan rotation speed and direction of the drying air fan 28.

Due to the constructional design of the fan 28 and if the motor 30 (this also applies if separate motor 70 is provided with a backward rotation) rotates in the backward direction, the air conveyance rate is lower than if the fan 28 is rotated in forward rotation direction at the same absolute value of rotation speed. This means that in forward rotation of the fan 28 the conveyance rate is higher as if rotating it with the same absolute rotation speed in the backward direction. Although nominally and absolutely the same rotation speed is used, the noise is also reduced in backward rotation of the fan as the noise caused by the flow of drying air is reduced due to lower conveyance rate.

Fig. 4a shows the temporal development of the refrigerant temperature Tr since the start of the drying program from ambient temperature Tamb. In the first drying phase P1 the refrigerant temperature Tr rises from Tamb to and a little above a first temperature threshold Tr1. At the instance I1, where Tr exceeds Tr1, the compressor 36 is switched off or deactivated as shown in Fig. 4b by C = 0. As shown in Fig. 4c, when the compressor is switched off, the drying air fan 42 is switched on or activated to rotate at the maximum nominal speed F1. Also as shown in Fig. 4d at instance I1 the drum rotation speed D is reduced from the maximum or nominal speed (in a dryer - a washer-dryer has higher maximum drum rotation speeds). Here the absolute value of the speed is reduced from the first rotation speed D1 (-D1 at I1) to the reduced rotation speed D2 (-D2 at I1). At I1 also the cooling air fan 42 is activated and the overall noise emission is reduced due to switching off of the compressor and reducing the drum rotation speed D. As the drying air fan 28 is also rotated with the slower speed (gear ratio with drum rotation), noise emission by the flowing drying air is also reduced.

After the instance I1 the refrigerant temperature Tr is going down until it is falling below the third threshold Tr3 at the instance I2. At the instance I2, the compressor 36 is activated again, however with a lower speed C2 as compared to the initial nominal or booster speed C 1. From instance I2 the compressor is continuously operated at the lower rotation speed C2 thereby reducing noise emission. At the instance I2 the cooling air fan 42 is deactivated.

For the drum rotation speed D as shown in Fig. 4d it is to be noted, that, except the reduction of the speed from D1 to D2 at the instance I1, the switching over between the forward and backward rotation direction is independent of the instances I1, I2... Only at the instance I1, which is the transition from the first drying phase P1 to the second drying phase P2, the maximum rotation speed is reduced form D1, -D1 to D2, -D2 and the ratio of rotating the drum in the forward direction and of rotation the drum in the backward direction is lowered. In the example shown the ratio of forward to backward rotation direction of the drum is reduced from about 4:1 to about 1:1. As mentioned, the air conveyance rate of the drying air fan 28 is not only reduced by reducing the speed of motor 30, but also by rotating the fan 28 in the backward direction. Thus, in the second drying phase P2 in average a reduction of conveyance rate is achieved by lowering the forward/backward rotation direction ratio and by reducing the nominal rotation speed (proportional to D).

As can be seen from Fig. 4a, during the second drying phase P2 the threshold Tr2 is a reduced threshold as compared to the threshold Tr1 used for switching on the cooling air fan 42. For example at the instances I3 and I5 the fan 42 is activated and rotated at a reduced fan rotation speed F2 which is used from then onward, if the fan 42 is activated. As can be seen by comparing Fig. 4a and Fig. 4c, the lower threshold Tr3 for deactivating the cooling air fan 42 is maintained during the second drying phase P2.

Due to the reduction of the compressor speed to C2, during the second drying phase P2 the compressor 36 needs no longer to be deactivated - except to the first deactivation in the period I1-I2 following the transition from the first to the second drying phase P1, P2. Thus, in this embodiment, during the second drying phase P2 noise reduction is achieved by reducing the compressor speed from C1 to C2, operating the cooling air fan 42 at reduced rotation speed F2 (except during the period I1-I2 where the cooling fan is operated at the nominal speed F1), reducing the absolute drum rotation speed D from D1 to D2, by reducing the absolute value of drying air fan rotation speed (proportional to D), and by reducing the conveyance rate of the drying air fan 28 further by increasing the periods of backward rotation direction relative to the periods of forward rotation direction (reducing the ratio of clockwise/counterclockwise rotation).

Figs. 5a - 5c show another embodiment of operating the dryer 2 when providing the separate motor 70 for driving the drying air fan 28 - for example when the dryer 2 is implemented by a washer-dryer. For Figs. 5a - 5c the same refrigerant temperature curve Tr as shown in Fig. 4a is applicable and the instances I1, I2... correspond to the respective instances, i.e. the instances where the refrigerant temperature Tr exceeds the first temperature threshold Tr1 (I1), undershoots the third temperature Tr3 (I2, I4...), or exceeds the second temperature threshold Tr2 (I3, I5...).

In this embodiment, the cooling air fan 42 is not operated at all and stays deactivated through the entire drying program. In this case as compared to the embodiment shown in Figs. 4a - 4d, no heat is removed from the heat pump system by cooling the compressor 36. Instead in this embodiment, in the second drying phase P2 the rotation speed of the compressor is reduced to a third rotation speed C3 which is lower than the reduced rotation speed C2 used for the compressor in Fig. 4b during the second drying phase P2. Thereby, the heat deposited by the compressor in the heat pump system 44 is reduced. In this embodiment, the "cooling function" of the non-activated blower 42 is taken over by the drying air fan 28 driven by the separate motor 70. Namely, as this is illustratively indicated by the 'waves' of the temperature Tr curve in Fig. 4a during phase P2 the flowing drying air conveyed by the fan 28 also removes heat from the heat pump system 44 and in consequence Tr falls, when the fan 28 is activated or operating at the higher speed G2.

As shown in Fig. 5b, during the first drying phase P1, the fan 28 is driven by motor 70 at nominal or maximum speed G1 which is continued until the instance I2 where the refrigerant Tr has been cooled down from Tr1 to Tr3. Thereafter, in the period I2-I3, the drying air fan 28 is stopped (rotation speed G= 0) and when the refrigerant temperature Tr has exceeded the second threshold Tr2 at the instance I3, the blower 28 rotates at a reduced rotation speed G2. At instance I4, when the refrigerant Tr is falling below the third threshold level Tr3, the blower speed is further reduced from G2 to G3 in the period I4-I5. For equilibrating the heat pump system 44 and keeping it in optimized and energy efficient state with the compressor speed C at the reduced speed C3, the drying air fan is intermittently driven at the two reduced speeds G2 and G3 or even deactivated G = 0. Preferably it is repeatedly driven in the sequence G=0, G2 and G3 triggered by Tr > Tr2 and Tr < Tr3.

As can be seen from Fig. 5c, as the drum 16 can be rotated independent of the fan 28, the drum rotation speed D is the same as described above for Fig. 4d.

In particular, in the second embodiment shown in Fig. 5a - 5c, the drying time is extended as of course a lower energy is deposited by the rotating the compressor at reduced speed C3. However, noise reduction is significant - for example the cooling air blower 42 has not to be operated at all. Nonetheless and despite the extended drying time, the total energy consumption in this embodiment is significant lower than in the basic drying program or as compared to the embodiment shown in the Figures.

**Reference Numeral List**

| | | | |
|---|---|---|---|
| 2 | laundry dryer | 62 | memory |
| 4 | housing / cabinet | 64 | drum motor inverter |
| 6 | front wall | 66 | compressor motor inverter |
| 8 | loading opening | 67 | compressor motor |
| 10 | door | 68 | cooling air fan motor |
| 12 | control panel | 70 | (drying air fan motor) |
| 14 | condensate drawer | | |
| 16 | drum | A | process air flow |
| 18 | laundry | C | compressor motor rotation speed |
| 20 | process air channel | C1, C2, C3 | first, second, third compressor speed |
| 20a | battery channel | | |
| 20b | rear channel | D | drum rotation speed |
| 20c | front channel | D1, D2 | first, second drum rotation speed |
| 22 | inlet | F | cooling air fan speed |
| 24 | outlet | F1, F2 | first, second cooling air fan rotation speed |
| 26 | fluff filter element | | |
| 28 | fan | G | drying air fan motor speed |
| 30 | motor | G1, G2, G3 | first, second, third fan motor speed |
| 32 | first heat exchanger | | |
| 34 | second heat exchanger | In | first, second, ... instance |
| 36 | compressor | P1, P2 | first, second drying phase |
| 38 | expansion device | Tamb | ambient temperature |
| 40 | refrigerant loop | Ti | drying air inlet temperature sensor |
| 42 | cooling air fan | To | drying air outlet temperature sensor |
| 44 | heat pump system | Tr | refrigerant temperature sensor / temperature |
| 48 | condensate collector | | |
| 50 | draining pump | Tr1, Tr2, Tr3 | refrigerant temperature threshold |
| 52 | drain conduit | | |
| 60 | control unit | | |

## Claims

1. Method for operating a heat-pump dryer (2) during a drying program, the dryer comprising:
a cabinet (4),
a drum (16) arranged within the cabinet and being adapted to receive laundry (18) for drying the laundry within the drum using drying air,
an air channel (20) adapted to guide the drying air from at least one air outlet (24) at the drum (16) to at least one air inlet (22) at the drum for providing an air circulation arrangement,
a drying air fan (28) adapted to convey the drying air through the air circulation arrangement,
a heat pump system (44) comprising a first heat exchanger (32) adapted to heat the drying air, a second heat exchanger (34) adapted to cool the drying air for humidity condensation, and a compressor (36) adapted to circulate refrigerant through the first and second heat exchangers,
a temperature sensor adapted to detect a temperature (Tr) of the heat pump system (44),
a motor (70) adapted to drive the drying air fan (28), and
a motor (30) adapted to drive the drum (16) independent of the motor (70) driving the drying air fan (28),
wherein the method comprises:
starting a drying program,
monitoring the temperature (Tr) of the heat pump system, and
if the temperature of the heat pump system is at or above a first threshold value (Tr1), setting, at least for one or more periods of the drying program, the rotation speed (D) or the maximum rotation speed of the drum (16) in dependency of the temperature (Tr) of the heat pump system.

2. Method according to claim 1, wherein, if the temperature (Tr) of the heat pump system (44) is at or above the first threshold value (Tr1), one or more of the following is provided by the method:
- reducing the drying air fan rotational speed (G),
- reducing the drying air fan conveyance rate,
- deactivating the operation of the compressor (36) or reducing the compressor speed (C), and
- activating a fan (42) for cooling the compressor (36).

3. Method according to claim 1 or 2, further comprising the steps of monitoring the temperature (Tr) of the heat pump system and if the temperature is at or below a second temperature threshold (Tr2), restarting the compressor (36).

4. Method according to claim 1, 2 or 3, wherein the temperature sensor adapted to detect the temperature (Tr) of the heat pump system (44) is arranged at one of the following positions of the heat pump system:
- an outlet of the first heat exchanger (32) for detecting the refrigerant temperature (Tr),
- an outlet of the compressor (36) for detecting the refrigerant temperature,
- the compressor (36) for detecting the compressor temperature,
- the second heat exchanger (34) for detecting the refrigerant temperature,
- an expansion device (38) arranged between the second and first heat exchanger for detecting the refrigerant temperature,
- in the air channel (20) between the first heat exchanger (32) and the at least one air inlet (22) at the drum (16) for detecting the drying air temperature (Ti),
- in the air channel (20) between the at least one outlet (24) at the drum and the second heat exchanger for detecting the drying air temperature (To), or
- a first temperature sensor is arranged in the air channel between the first heat exchanger and the at least one air inlet at the drum for detecting a first drying air temperature (Ti) and a second temperature sensor is arranged in the air channel between the at least one air outlet at the drum and the second heat exchanger for detecting a second drying air temperature (To), wherein the monitored temperature is the temperature difference (Ti-To) between the first and second drying air temperature.

5. Method according to any of the previous claims, wherein, when the temperature (Tr) of the heat pump system is at or above the first threshold value (Tr1), then:
- the compressor (36) is deactivated or operated at a reduced speed (C2, C3),
- a or the compressor cooling fan (42) is activated, and
- the drying air fan (28) is deactivated.

6. Method according to any of the previous claims, wherein, when the temperature of the heat pump system is at or above the first threshold value (Tr1), then:
- the compressor (36) is deactivated or operated at reduced speed (C2, C3),
- the compressor cooling fan (42) is activated,
- the drum rotation is deactivated or the drum (16) is stopped, and
- the drying air fan (28) is operated.

7. Method according to claim 6, wherein the drying air fan (28) is rotated by one or more of:
- at a reduced maximum rotation speed (G2, G3) as compared to the rotation speed (G1) before detecting that the temperature is at or above the first threshold value (Tr1), and
- at a reduced duty ratio as compared to the duty ratio before detecting that the temperature is at or above the first threshold value (Tr1), or the drying air fan rotation is stopped.

8. Method according to any of the previous claims, wherein the motor (68) for driving the cooling air fan (42) is a variable speed motor and the method further comprises:
receiving a user-input indicating the option silent-mode or night-mode for operating the dryer, and
if the user-input indicates such mode selection by the user, operating, at least for predetermined periods of the drying program, the cooling air fan at a second speed (F2) in case the compressor cooling fan is activated, and
if the user-input indicates that such mode was not selected by the user, operating the compressor cooling fan at a first speed (F1) in case the compressor cooling fan is activated,
wherein the first speed (F1) is higher than the second speed (F2).

9. Method according to any of the previous claims, wherein the motor (70) for driving the drying air fan (28) is a variable speed motor and the method further comprises:
receiving a user-input indicating the option silent-mode or night-mode for operating the dryer, and
if the user-input indicates such mode selection by the user, operating, at least for predetermined periods of the drying program, the drying air fan (28) at a second speed (G2, G3) in case the drying air fan is activated, and
if the user-input indicates that such mode was not selected by the user, operating the drying air fan at a first speed (G1) in case the drying air fan is activated,
wherein the first speed (G1) is higher than the second speed (G2, G3).

10. Method according to any of the previous claims, wherein the motor (66) for driving the compressor (36) is a variable speed motor and the method further comprises:
receiving a user-input indicating the option silent-mode or night-mode for operating the dryer, and
if the user-input indicates such mode selection by the user, operating, at least for predetermined periods of the drying program, the compressor at a second speed (C2, C3) in case the compressor is activated, and
if the user-input indicates that such mode was not selected by the user, operating the compressor at a first speed (C1) in case the compressor is activated,
wherein the first speed (C1) is higher than the second speed (C2, C3).
